# FASCICULE DE BREVET EUROPEEN

(11) **EP 3 052 669 B1**
(45) Date de publication et mention de la délivrance du brevet: **12.06.2019**
(21) Numéro de dépôt: 14784500.2
(22) Date de dépôt: 26.09.2014
(51) Int. Cl.: C22C 21/12, C22C 21/14, C22C 21/16, C22F 1/04, C22F 1/057

(54) **TÔLE D'INTRADOS À PROPRIÉTÉS DE TOLÉRANCE AUX DOMMAGES AMÉLIORÉES**
FLÜGELUNTERSEITEN-FOLIENMATERIAL MIT VERBESSERTEN SCHADENSTOLERANZEIGENSCHAFTEN
UNDERWING SHEET METAL WITH IMPROVED DAMAGE TOLERANCE PROPERTIES

(30) Priorité: 30.09.2013 FR 1302273
(43) Date de publication de la demande: 10.08.2016
(73) Titulaire: Constellium Issoire, 63500 Issoire (FR)
(72) Inventeur: BES, Bernard, 38180 Seyssins (FR)
(74) Mandataire: Constellium - Propriété Industrielle
(86) Numéro de dépôt international: PCT/FR2014/000216
(87) Numéro de publication internationale: WO 2015/044538

(56) Documents cités:
- EP-A1- 1 114 877
- EP-B1- 1 144 704
- FR-A1- 2 843 754
- FR-A1- 2 843 755
- FR-A1- 2 858 984
- AMANCIO FILHO SERGIO T: "Friction riveting: development and analysis of a new joining technique for polymer-metal multi-material structures", WELDING IN THE WORLD, ELSEVIER / INTERNATIONAL INSTITUTE OF WELDING, ROISSY, FR, vol. 55, no. 1-2, 1 janvier 2011 (2011-01-01), pages 13-24, XP001561238, ISSN: 0043-2288

## Description

### Domaine de l'invention

L'invention concerne les produits laminés en alliage aluminium cuivre magnésium plus particulièrement, de tels produits, leurs procédés de fabrication et d'utilisation, destinés notamment à la construction aéronautique et aérospatiale.

### Etat de la technique

L'augmentation sensible du prix des carburants a récemment conduit les avionneurs à proposer de nouveaux modèles présentant une consommation réduite.

Notamment, de nouveaux avions monocouloir avec une motorisation améliorée ont été proposés. Cependant, les nouveaux moteurs utilisés étant plus lourds et volumineux les avionneurs sont confrontés à de nouvelles contraintes mécaniques sur les ailes. De plus il est souhaité par les compagnies aériennes de pouvoir davantage espacer les révisions complètes des structures et pour cela il est nécessaire d'améliorer encore les propriétés en fatigue des matériaux utilisés, en particulier pour la partie inférieure des ailes (intrados) qui est sollicitée en traction lors du vol.

L'alliage 2024 à l'état T3 a été un matériau standard pour la réalisation d'intrados depuis de nombreuses années en raison de sa tolérance aux dommages élevée. Des produits ayant une tolérance aux dommages équivalente mais une résistance mécanique statique plus élevée ont été recherchés.

L'alliage 2324 à l'état T39 permet d'obtenir une résistance mécanique plus élevée tout en conservant une ténacité similaire à celle de l'alliage 2024 à l'état T3, notamment en réalisant un laminage à froid d'environ 10%.

Les brevets US 5863359 et US5865914 décrivent un alliage de composition (en % en poids) Cu : 3,6 - 4,0, Mg : 1,0 - 1,6, Mn : 0,3 - 0,7, Zr : 0,05 - 0,25 pour la réalisation d'éléments d'intrados. Typiquement le produit est laminé à froid d'environ 9% et détensionné avec un allongement permanent d'environ 1% et présente les propriétés suivantes : R_{p0,2} (TL) d'au moins 414 MPa et K_{1C} (L-T) d'au moins 42 MPa√m.

Le brevet EP1026270 décrit un alliage de composition (en % en poids) Fe < 0,15, Si < 0,15, Cu : 3,8 - 4,4, Mg : 1 - 1,5, Mn : 0,5 - 0,8, Zr : 0,08 - 0,15. Cet alliage est transformé de façon à ce que les produits laminés, filés ou forgés obtenus présentent un rapport Rₘ(L)/R_{0,2}(L) supérieur à 1,25.

Le brevet US 6,325,869 décrit un produit extrudé essentiellement non recristallisé en alliage de composition (en % en poids) Fe < 0,1, Si < 0,1, Cu : 3,6 - 4,2, Mg : 1,0 - 1,6, Mn : 0,3 - 0,8, Zr : 0,05 - 0,25.

La demande de brevet FR 2 843 755 décrit un alliage Al-Cu comprenant (en % en poids) Cu : 3,8 - 4,7, Mg : 1,0 - 1,6, Zr : 0,06 - 0,18, Mn : >0 - 0,5, Cr < 0,15, Fe ≤ 0,15, Si ≤ 0,15, avec de préférence Mn compris dans un intervalle de 0,20 à 0,45 % en poids ou mieux encore dans un intervalle allant de 0,25 à 0,30 % en poids.

Les produits nécessitant un écrouissage à froid important, typiquement un laminage à froid d'environ 9%, ont l'inconvénient de présenter une différence entre Rₘ et R_{0,2} faible ce qui entraîne une formabilité à froid plus faible, une moins bonne tenue en propagation de fissures en fatigue sous spectre de chargement à amplitude variable, représentatif du cycle de vie d'un avion (« fatigue sous spectre ») et un taux plus élevé de contraintes résiduelles.

Les tôles connues en alliage 2XXX utilisées à l'état T351 c'est-à-dire mis en solution, écrouis avec 1,5 à 3 % de déformation permanent et mûris, c'est-à-dire vieillis à température ambiante jusqu'à obtention d'un état pratiquement stable, ne permettent pas cependant d'atteindre simultanément une résistance mécanique statique et des propriétés de fatigue sous spectre suffisantes.

On a également utilisé l'alliage 2419 à l'état T8 pour l'intrados d'avions militaires.

On connait par ailleurs l'utilisation d'alliages 7XXX pour la réalisation d'intrados d'aile d'avion. Les alliages 7178 à l'état T6 et 7075 à l'état T76 ont été utilisés pour ces éléments dans le passé. On a également proposé l'alliage 7475 à l'état T73 ou l'alliage 7150 à l'état T77.

Le brevet US 5865911 décrit un alliage comprenant (en % en poids) Zn : 5,2 -6,8 %, Cu : 1,7 - 2,4 %, Mg : 1,6 - 2,2 %, Zr : 0,03 - 0,3% pour la réalisation d'intrados d'aile d'avion.

Le problème que cherche à résoudre l'invention est d'améliorer les propriétés des produits en alliage AlCuMg, notamment en ce qui concerne le compromis entre la résistance mécanique statique, la ténacité, la propagation des fissures en fatigue sous spectre, la formabilité et le taux de contraintes résiduelles.

### Objet de l'invention

Un premier objet de l'invention est un produit laminé à l'état T351, dont l'épaisseur est comprise entre 15 et 50 mm, en alliage d'aluminium de composition, en % en poids,
Cu : 3,85 - 4,15
Mg: 0,95 - 1,25
Mn : 0,45 - 0,57
Zr: 0,09 - 0,16
Ti : 0,005 - 0,1
Fe : < 0,070
Si : < 0,060
avec Cu + Mg ≤ 5,15
autres éléments inférieurs 0,05 chacun et inférieurs à 0,15 au total, reste aluminium.

Un deuxième objet de l'invention est un procédé de fabrication d'un produit laminé selon l'invention dans lequel
- on élabore et on coule en ajoutant un affinant de type AlTiB ou AlTiC un alliage selon la composition de l'invention pour obtenir une plaque de laminage,
- optionnellement on homogénéise ladite plaque de laminage à une température comprise entre 480°C et 510°C,
- on lamine à chaud ladite plaque de laminage optionnellement homogénéisée pour obtenir une tôle d'épaisseur e comprise entre 15 et 50 mm,
- on met en solution ladite tôle à une température comprise entre 480 et 505 °C pendant une durée t exprimée en heures telle que t ≥ e / 7,
- on trempe ladite tôle ainsi mise en solution,
- on réalise une traction à froid de ladite tôle ainsi trempée avec une déformation comprise entre 1,5 et 3%,
- on réalise un vieillissement à température ambiante.

Encore un autre objet de l'invention est un élément d'intrados d'aile d'avion comprenant une tôle selon l'invention.

### Description de l'invention

Sauf mention contraire, toutes les indications concernant la composition chimique des alliages sont exprimées comme un pourcentage en poids basé sur le poids total de l'alliage. L'expression 1,4 Cu signifie que la teneur en cuivre exprimée en % en poids est multipliée par 1,4. La désignation des alliages se fait en conformité avec les règlements de The Aluminium Association, connus de l'homme du métier. Sauf mention contraire les définitions des états métallurgiques indiquées dans la norme européenne EN 515 s'appliquent.
Les caractéristiques mécaniques statiques en traction, en d'autres termes la résistance à la rupture Rₘ, la limite d'élasticité conventionnelle à 0,2% d'allongement R_{p0,2}, et l'allongement à la rupture A%, sont déterminés par un essai de traction selon la norme NF EN ISO 6892-1, le prélèvement et le sens de l'essai étant définis par la norme EN 485-1. Dans le cadre de l'invention, les caractéristiques mécaniques sont mesurées à mi-épaisseur des tôles. Sauf mention contraire, les définitions de la norme EN 12258 s'appliquent. La ténacité est mesurée conformément à la norme ASTM E399.

Les présents inventeurs ont constaté qu'il est possible d'améliorer significativement le compromis entre la résistance mécanique statique, la propagation des fissures en fatigue sous spectre, la formabilité et le taux de contraintes résiduelles grâce à des produits laminés à l'état T351 en alliage 2XXX de composition soigneusement sélectionnée. L'invention concerne des tôles épaisses dont l'épaisseur est comprise entre 15 et 50 mm et de préférence entre 20 et 40 mm. Les présents inventeurs ont en particulier constaté que en sélectionnant la teneur en cuivre entre 3,85 et 4,15 % en poids et de préférence entre 3,90 et 4,10 % en poids, la teneur en magnésium entre 0,95 et 1,25 % en poids, de préférence entre 0,96 et 1,15% en poids et de manière préférée entre 0,98 et 1,10 % en poids, avec la condition supplémentaire que Cu + Mg ≤ 5,15 et de préférence Cu + Mg ≤ 5,05 il est possible d'améliorer les propriétés de fatigue sous spectre tout en maintenant une résistance mécanique statique suffisante. La teneur en manganèse de l'alliage selon l'invention est comprise entre 0,45 et 0,57 % en poids et de préférence entre 0,48 et 0,55 % en poids. Dans un mode de réalisation de l'invention la teneur en manganèse est au moins 0,51 % en poids et de préférence au moins 0,54 % en poids. La teneur en titane de l'alliage selon l'invention est comprise entre 0,005 et 0,1 % en poids et de préférence entre 0,010 et 0,05 % en poids. La teneur en zirconium de l'alliage selon l'invention est comprise entre 0,09 et 0,16 % en poids et de préférence entre 0,10 et 0,15 % en poids. De manière surprenante il est plus efficace de sélectionner selon l'invention les teneurs en cuivre, magnésium, manganèse, titane et zirconium pour améliorer le compromis que de diminuer la teneur en fer et en silicium. Ainsi la teneur en silicium est inférieure à 0,060 % en poids et de préférence inférieure à 0,040 % en poids mais une teneur inférieure à 0,020 % en poids n'est pas nécessaire. Dans un mode de réalisation de l'invention on tolère une teneur en silicium d'au moins 0,020% en poids ce qui permet de diminuer le coût de l'alliage. De même la teneur en fer est inférieure à 0,070 % en poids et de préférence inférieure à 0,060 % en poids mais une teneur inférieure à 0,030 % en poids n'est pas nécessaire. Dans un mode de réalisation de l'invention on tolère une teneur en fer d'au moins 0,030% en poids ce qui permet de diminuer le coût de l'alliage.
Les autres éléments ont une teneur inférieure à 0,05 % en poids chacun, et de préférence inférieure à 0,03 % chacun et 0,15 % en poids au total et de préférence inférieure à 0,10 % en poids au total. Le reste est de l'aluminium.
Les produits selon l'invention sont obtenus par un procédé dans lequel tout d'abord on élabore et on coule en ajoutant un affinant de type AlTiB ou AlTiC un alliage de composition selon l'invention pour obtenir une plaque de laminage.
Par affinant AlTiB on entend dans le cadre de la présente invention un alliage d'aluminium comprenant entre 1 et 10% de titane, entre 0,5 et 5% de bore, les produits typiquement utilisés, connus sous la référence AT3B et AT5B comprennent respectivement 3% et 5% de titane et 1% de bore. Par affinant AlTiC on entend dans le cadre de la présente invention un alliage d'aluminium comprenant entre 1 et 10% de titane et entre 0,01 et 1% de carbone, les produits typiquement utilisés, connus sous la référence AT3C0,15 et AT6C0,02 comprennent respectivement 3% de titane et 0,15 % de carbone et 6% de titane et 0,02 % de carbone. Ces produits peuvent être ajoutés dans le four ou dans une goulotte à l'aide d'un fil lors de la coulée. Les présents inventeurs ont constaté que l'ajout d'un affinant de type AlTiC est avantageux car il permet d'obtenir des produits ayant des propriétés de fatigue sous spectre encore améliorées. Optionnellement on homogénéise ladite plaque de laminage à une température comprise entre 480°C et 510°C préféré entre 490 et 508°C.
On lamine à chaud la plaque de laminage optionnellement homogénéisée pour obtenir une tôle d'épaisseur e, exprimée en mm, comprise entre 15 et 50 mm. Avantageusement la température moyenne lors du laminage à chaud jusqu'à l'épaisseur 60 mm, c'est-à-dire la moyenne des températures de chaque passe de laminage à chaud jusqu'à l'épaisseur 60 mm, est au moins 450 °C. La température de sortie du laminage à chaud peut également influencer les propriétés mécaniques, avantageusement la température de sortie du laminage à chaud est au moins 410 °C.

On met en solution ladite tôle à une température comprise entre 480 et 505 °C pendant une durée t exprimée en heures telle que t ≥ e / 7, où e est l'épaisseur de la tôle exprimée en mm. Ainsi pour une épaisseur de 15 mm la durée doit être au moins 2,1 h et pour une durée de 50 mm la durée doit être d'au moins 7,1heure. Les présents inventeurs ont constaté que de manière surprenante une durée de mise en solution trop élevée peut être néfaste pour la performance en fatigue sous spectre et/ou pour la résistance mécanique statique, alors que l'on aurait imaginé au contraire qu'elle permettait d'améliorer encore la mise en solution et donc les performances mécaniques. Avantageusement la mise en solution est réalisée à une température d'au moins 495 °C ladite durée t exprimée en heures étant telle que t ≤ e / 4,5 et préférentiellement t ≤ e / 5,0 et de manière préférée t ≤ e / 5,5 où e est l'épaisseur de la tôle exprimée en mm La tôle ainsi mise en solution est ensuite trempée, typiquement par immersion ou aspersion à l'eau froide. On réalise une traction à froid de ladite tôle ainsi trempée avec une déformation comprise entre 1,5 et 3% de déformation permanente. On réalise enfin un vieillissement à température ambiante jusqu'à l'obtention d'un état pratiquement stable pour obtenir un état T351.
Compte tenu des conditions de transformations utilisées, la tôle ainsi obtenue présente un rapport entre la résistance à la rupture Rₘ dans la direction L et la limite d'élasticité conventionnelle à 0,2% d'allongement R_{p0,2} dans la direction L supérieur à 1,25 et de préférence supérieur à 1,30. La limite d'élasticité conventionnelle à 0,2% d'allongement R_{p0,2} dans la direction L est avantageusement d'au moins 350 MPa, de préférence d'au moins 365 MPa. Les tôles obtenues par le procédé selon l'invention présentent notamment un compromis avantageux entre la résistance mécanique statique, la ténacité et la propagation des fissures en fatigue sous spectre.

Les éléments d'intrados d'aile d'avion comprenant une tôle selon l'invention sont avantageux.

### Exemples

### Exemple 1 : tôles d'épaisseur 35 mm

Dans cet exemple, des plaques de laminage ont été coulées. La composition des plaques ainsi que le type d'affinant utilisé sont donnés dans le tableau 1. Les plaques 8 à 14 ont une composition selon l'invention.

**Tableau 1. Caractéristiques des plaques coulées, les compostions sont données en % en poids.**

| Essai | Affinant | Si | Fe | Cu | Mn | Mg | Cu+Mg | Ti | Zr |
|---|---|---|---|---|---|---|---|---|---|
| 1 | AT5B | 0,040 | 0,075 | 4,21 | 0,63 | 1,29 | 5,50 | 0,013 | 0,098 |
| 2 | AT3C0,15 | 0,053 | 0,094 | 4,15 | 0,55 | 1,27 | 5,42 | 0,022 | 0,117 |
| 3 | AT5B | 0,023 | 0,029 | 4,08 | 0,57 | 1,16 | 5,24 | 0,021 | 0,106 |
| 4 | AT5B | 0,054 | 0,079 | 4,06 | 0,56 | 1,27 | 5,33 | 0,013 | 0,115 |
| 5 | AT3C0,15 | 0,031 | 0,040 | 4,10 | 0,66 | 1,29 | 5,39 | 0,024 | 0,103 |
| 6 | AT3C0,15 | 0,033 | 0,050 | 4,00 | 0,56 | 1,24 | 5,24 | 0,028 | 0,092 |
| 7 | AT3C0,15 | 0,018 | 0,039 | 4,06 | 0,61 | 1,31 | 5,37 | 0,005 | 0,098 |
| 8 | AT3C0,15 | 0,025 | 0,033 | 3,97 | 0,55 | 1,07 | 5,04 | 0,021 | 0,114 |
| 9 | AT5B | 0,026 | 0,063 | 4,01 | 0,54 | 1,05 | 5,06 | 0,022 | 0,106 |
| 10 | AT5B | 0,029 | 0,045 | 3,97 | 0,51 | 1,08 | 5,05 | 0,020 | 0,120 |
| 11 | AT5B | 0,026 | 0,063 | 4,01 | 0,54 | 1,05 | 5,06 | 0,022 | 0,106 |
| 12 | AT3C0,15 | 0,024 | 0,028 | 4,03 | 0,57 | 1,09 | 5,12 | 0,023 | 0,108 |
| 13 | AT3C0,15 | 0,025 | 0,033 | 3,97 | 0,55 | 1,07 | 5,04 | 0,021 | 0,114 |
| 14 | AT3C0,15 | 0,030 | 0,044 | 3,94 | 0,52 | 0,99 | 4,93 | 0,020 | 0,118 |

Les tôles ont été laminées à chaud jusqu'à une épaisseur comprise entre 35 et 37 mm puis mises en solution à une température de 497 °C puis trempées. Toutes les tôles ont subi une traction contrôlée avec un allongement permanent de 2,2% et ont ensuite été vieillies naturellement à température ambiante pour obtenir un état T351. Les conditions de transformation sont données dans le tableau 2. Les durées de mise en solution des essais 3, 8 et 9 sont significativement plus élevées par rapport à celles des autres essais.

**Tableau 2 - Conditions de transformation des plaques**

| Essai | Température moyenne de laminage à chaud jusqu'à l'épaisseur 60 mm (°C) | Température de sortie de laminage à chaud (°C) | Epaisseur finale (mm) | Durée de mise en solution (h) |
|---|---|---|---|---|
| 1 | 442 | 404 | 36,7 | 6 |
| 2 | 449 | nd | 35,5 | 6 |
| 3 | 460 | 449 | 36 | 9,3 |
| 4 | 431 | nd | 35,5 | 6 |
| 5 | 456 | 421 | 35,6 | 6 |
| 6 | 458 | 420 | 35,6 | 6 |
| 7 | nd | 450 | 36 | 6 |
| 8 | 459 | 441 | 36 | 9,3 |
| 9 | 457 | 408 | 36 | 9,6 |
| 10 | 461 | 435 | 35 | 5,1 |
| 11 | 455 | 419 | 35 | 6,7 |
| 12 | 455 | 431 | 35 | 7 |
| 13 | 454 | 429 | 35 | 6 |
| 14 | nd | 452 | 35 | 5,8 |

| | | | | |
|---|---|---|---|---|
| nd : non disponible | | | | |

On a mesuré les caractéristiques mécaniques statiques des tôles dans le sens L et TL, ainsi que la ténacité sur des éprouvettes de largeur 76 mm et d'épaisseur B = 2 mm, dans le sens T-L et dans le sens L-T. Les caractéristiques mécaniques statiques et la ténacité ont été mesurées à mi-épaisseur. De plus, on a mesuré la fatigue sous spectre représentative des conditions intrados d'un avion commercial selon la spécification d'un fabriquant d'avion sur des éprouvettes de type CCT, d'épaisseur 12 mm, de longueur 700 mm et de largeur 200 mm ayant une entaille de 30 mm. Les éprouvettes de caractérisation de fatigue sous spectre ont été prélevées de façon à être centrées 11 mm sous la surface de la tôle. Les résultats de fatigue sous spectre ont été obtenus après une préfissuration par fatigue jusqu'à ce la fissure atteigne 40 mm. Le résultat obtenu est le nombre de vols entre 50 mm et 130 mm de propagation de fissure.

Les résultats obtenus sont donnés dans le Tableau 3.

**Tableau 3 - Caractéristiques mécaniques mesurées**

| Essai | Rₘ L (MPa) | R_{p0,2} L (MPa) | A% L | Rₘ TL (MPa) | R_{p0,2} TL (MPa) | A% TL | Fatigue sous spectre (nombre de vols) | Kq W76 L-T (MPa√m) | Kq W76 T-L (MPa√m) |
|---|---|---|---|---|---|---|---|---|---|
| 1 | 500 | 383 | 15,6 | 467 | 331 | 16,6 | 4211 | | |
| 2 | 509 | 380 | 15,6 | 475 | 335 | 16,6 | 4293 | | |
| 3 | 500 | 379 | 16,3 | 474 | 336 | 18,3 | 4730 | 58,8 | 49,5 |
| 4 | 501 | 372 | 16,6 | 468 | 327 | 18,7 | 4940 | | |
| 5 | 524 | 413 | 15,5 | 493 | 369 | 17,9 | 4958 | 58,6 | 47,7 |
| 6 | 512 | 398 | 16,8 | 486 | 350 | 18,7 | 5001 | 57,7 | 49,0 |
| 7 | 520 | 399 | 14,9 | 488 | 352 | 17,6 | 5157 | 59,7 | 49,8 |
| 8 | 502 | 383 | 16,9 | 478 | 339 | 19,6 | 5183 | 60,6 | 52,3 |
| 9 | 482 | 357 | 16,8 | 462 | 323 | 18,6 | 5334 | 59,3 | 51,2 |
| 10 | 504 | 390 | 16,3 | 475 | 345 | 18,7 | 5437 | 62 | 59 |
| 11 | 486 | 371 | 16,2 | 464 | 329 | 18,4 | 5459 | 57,0 | 50,2 |
| 12 | 503 | 389 | 16,4 | 474 | 343 | 19,0 | 5516 | 61 | 54 |
| 13 | 492 | 374 | 15,8 | 465 | 331 | 18,0 | 5650 | 58,8 | 56,1 |
| 14 | 490 | 376 | 15,8 | 463 | 333 | 18,6 | 5676 | 59 | 50 |

Avec la composition selon l'invention, on obtient toujours un nombre de vols d'au moins 5183. Le nombre de vols obtenu pour l'échantillon 7 est plus faible malgré une teneur en silicium et en fer très faible. Ainsi, la composition selon l'invention permet donc d'obtenir une performance satisfaisante en fatigue sous spectre sans recourir à une très faible teneur en fer et en silicium, et pour les compositions hors invention en Cu, Mg et Mn une très faible teneur en fer et silicium ne permet pas d'atteindre une performance en fatigue suffisante. On constate par ailleurs, notamment en comparant les échantillons 8 et 13 ou 9 et 11, qu'une durée de mise en solution trop élevée est défavorable pour la performance en fatigue sous spectre. Les meilleurs résultats en fatigue sous spectre sont obtenus avec la combinaison d'une composition selon l'invention, d'un affinage de type AlTiC et d'une durée de mise en solution inférieure ou égale à l'épaisseur divisée par 4,5.

### Exemple 2 : tôles d'épaisseur 25 mm

Dans cet exemple, des plaques de laminage on été coulées. La composition des plaques ainsi que le type d'affinant utilisé sont donnés dans le tableau 4.

Les plaques 17 à 19 ont une composition selon l'invention.

**Tableau 4. Caractéristiques des plaques coulées. Les compostions sont données en % en poids.**

| Essai | Affinant | Si | Fe | Cu | Mn | Mg | Cu+Mg | Ti | Zr |
|---|---|---|---|---|---|---|---|---|---|
| 15 | AT5B | 0,035 | 0,075 | 4,11 | 0,61 | 1,24 | 5,35 | 0,016 | 0,093 |
| 16 | AT5B | 0,040 | 0,075 | 4,21 | 0,63 | 1,29 | 5,50 | 0,013 | 0,098 |
| 17 | AT5B | 0,026 | 0,063 | 4,01 | 0,54 | 1,06 | 5,07 | 0,022 | 0,106 |
| 18 | AT5B | 0,026 | 0,063 | 4,01 | 0,54 | 1,05 | 5,06 | 0,022 | 0,106 |
| 19 | AT3C0,15 | 0,025 | 0,033 | 3,97 | 0,55 | 1,07 | 5,04 | 0,021 | 0,114 |

Les tôles ont été laminées à chaud jusqu'à une épaisseur de 25 mm puis mises en solution à une température de 497 °C puis trempées. Toutes les tôles ont subi une traction contrôlée avec un allongement permanent de 2,2% et ont ensuite été vieillies naturellement à température ambiante pour obtenir un état T351. Les conditions de transformation sont données dans le tableau 5

**Tableau 5 - Conditions de transformation des plaques**

| Essai | Température moyenne de laminage à chaud jusqu'à l'épaisseur 60 mm | Température de sortie de laminage à chaud | Durée de mise en solution (h) |
|---|---|---|---|
| 15 | 423 | 363 | 6 |
| 16 | 436 | 379 | 6 |
| 17 | 453,1 | 427,0 | 6,6 |
| 18 | 454,6 | 405,0 | 4,2 |
| 19 | 453,5 | 420,0 | 5,6 |

On a mesuré les caractéristiques mécaniques statiques des tôles dans le sens L et TL, ainsi que la ténacité sur des éprouvettes de largeur 76 mm dans le sens T-L et dans le sens L-T. Les caractéristiques mécaniques statiques et la ténacité ont été mesurées à mi-épaisseur. De plus, on a mesuré la fatigue sous spectre représentative des conditions intrados d'un avion commercial selon la spécification d'un fabriquant d'avion sur des éprouvettes de type CCT, d'épaisseur 12 mm, de longueur 700 mm et de largeur 200 mm ayant une entaille de 30 mm. Les éprouvettes de caractérisation de la fatigue sous spectre ont été prélevées de façon à être centrées à mi-épaisseur de la tôle. Les résultats de fatigue sous spectre ont été obtenus après une préfissuration par fatigue jusqu'à ce que la fissure atteigne 40 mm. Le résultat obtenu est le nombre de vols entre 50 mm et 130 mm de propagation de fissure.

Les résultats obtenus sont donnés dans le Tableau 6.

**Tableau 6 - Caractéristiques mécaniques mesurées**

| Essai | Rₘ L (MPa) | R_{p0,2} L (MPa) | A% L | Rₘ TL (MPa) | R_{p0,2} TL (MPa) | A% TL | Fatigue sous spectre (nombre de vols) | Kq W76 L-T (MPa√m) | Kq W76 T-L (MPa√m) |
|---|---|---|---|---|---|---|---|---|---|
| 15 | 493 | 366 | 19,2 | 482 | 332 | 19,5 | 5124 | | |
| 16 | 504 | 378 | 18,5 | 488 | 341 | 18,4 | 5293 | | |
| 17 | 486 | 366 | 16,9 | 470 | 329 | 18,9 | 5718 | 54,0 | 50,3 |
| 18 | 488 | 373 | 17,0 | 469 | 334 | 17,9 | 5910 | 52,7 | 49,0 |
| 19 | 497 | 382 | 17,1 | 474 | 340 | 19,3 | 6348 | 55,0 | 52,5 |

Pour cette épaisseur, on obtient toujours un nombre de vols d'au moins 5718 avec la composition selon l'invention. On constate comme pour l'épaisseur 35 mm, notamment en comparant les échantillons 17 et 18, qu'une durée de mise en solution trop élevée est défavorable pour la performance en fatigue sous spectre. Les meilleurs résultats en fatigue sous spectre sont à nouveau obtenus avec la combinaison d'une composition selon l'invention, d'un affinage de type AlTiC et d'une durée de mise en solution inférieure ou égale à 5,6 heures.

## Revendications

1. Produit laminé à l'état T351, dont l'épaisseur est comprise entre 15 et 50 mm, en alliage d'aluminium de composition, en % en poids,
Cu: 3,85 - 4,15
Mg: 0,95 - 1,25
Mn : 0,45 - 0,57
Zr : 0,09 - 0,16
Ti : 0,005 - 0,1
Fe : < 0,070
Si : < 0,060
avec Cu + Mg ≤ 5,15
autres éléments inférieurs 0,05 chacun et inférieurs à 0,15 au total, reste aluminium.

2. Produit selon la revendication 1 dans lequel Fe 0,030 - 0,060 % en poids et/ou Si : 0,020 - 0,040 % en poids.

3. Produit selon la revendication 1 ou la revendication 2 dans lequel, en % en poids, Mn : 0,48 - 0,55.

4. Produit selon une quelconque des revendications 1 à 3 dans lequel, en % en poids, la teneur en manganèse est au moins 0,51 % en poids et de préférence au moins 0,54 % en poids.

5. Produit selon une quelconque des revendications 1 à 4 dans lequel, en % en poids, Mg : 0,96 - 1,15 et de préférence 0,98 - 1,10.

6. Produit selon une quelconque des revendications 1 à 5 dans lequel, en % en poids, Cu + Mg ≤ 5,05.

7. Produit selon une quelconque des revendications 1 à 6 présentant un rapport Rₘ(L)/R_{p0,2}(L) > 1,25.

8. Procédé de fabrication d'un produit laminé selon une quelconque des revendications 1 à 7 dans lequel
- on élabore et on coule en ajoutant un affinant de type AlTiB ou AlTiC un alliage selon la composition d'une quelconque des revendications 1 à 6 pour obtenir une plaque de laminage,
- optionnellement on homogénéise ladite plaque de laminage à une température comprise entre 480°C et 510°C,
- on lamine à chaud ladite plaque de laminage optionnellement homogénéisée pour obtenir une tôle d'épaisseur e comprise entre 15 et 50 mm,
- on met en solution ladite tôle à une température comprise entre 480 et 505 °C pendant une durée t exprimée en heures telle que t ≥ e / 7,
- on trempe ladite tôle ainsi mise en solution,
- on réalise une traction à froid de ladite tôle ainsi trempée avec une déformation comprise entre 1,5 et 3%,
- on réalise un vieillissement à température ambiante.

9. Procédé selon la revendication 8 dans lequel ledit affinant est un affinant de type AlTiC.

10. Procédé selon la revendication 8 ou la revendication 9 dans lequel ladite mise en solution est réalisée à une température d'au moins 495 °C et ladite durée t est telle que t ≤ e / 4,5.

11. Procédé selon une quelconque des revendications 8 à 10 dans lequel la température moyenne lors du laminage à chaud jusqu'à l'épaisseur 60 mm est au moins 450 °C.

12. Elément d'intrados d'aile d'avion comprenant une tôle selon une quelconque des revendications 1 à 7.

## Patentansprüche

1. Walzprodukt im Zustand T351 mit einer Dicke zwischen 15 und 50 mm aus einer Aluminiumlegierung der Zusammensetzung, in Gewichtsprozent,
Cu: 3,85 - 4,15
Mg: 0,95 - 1,25
Mn: 0,45 - 0,57
Zr: 0,09 - 0,16
Ti: 0 005 - 0,1
Fe: < 0,070
Si: < 0,060
mit Cu + Mg ≤ 5,15
weitere Elemente jeweils weniger als 0,05 und insgesamt weniger als 0,15, Rest Aluminium.

2. Produkt nach Anspruch 1, bei dem Fe: 0,030 - 0,060 Gew.-% und/oder Si: 0,020 - 0,040 Gew.-%.

3. Produkt nach Anspruch 1 oder Anspruch 2, bei dem, in Gew.-%, Mn: 0,48 - 0,55.

4. Produkt nach irgendeinem der Ansprüche 1 bis 3, bei dem, in Gew.-%, der Mangangehalt mindestens 0,51 Gew.-% und vorzugsweise mindestens 0,54 Gew.-% beträgt.

5. Produkt nach irgendeinem der Ansprüche 1 bis 4, bei dem, in Gew.-%, Mg: 0,96 - 1,15 und vorzugsweise 0,98 - 1,10.

6. Produkt nach irgendeinem der Ansprüche 1 bis 5, bei dem, in Gew.-%, Cu + Mg ≤ 5,05.

7. Produkt nach irgendeinem der Ansprüche 1 bis 6 mit einem Verhältnis Rm(L)/R_{p0,2}(L) > 1,25.

8. Verfahren zur Herstellung eines Walzprodukts nach irgendeinem der Ansprüche 1 bis 7, bei dem
- eine Legierung gemäß der Zusammensetzung einer der Ansprüche 1 bis 6 hergestellt und unter Zugabe eines Raffinationsmittels vom Typ AlTiB oder AlTiC zu einem Walzbarren vergossen wird,
- der Walzbarren optional bei einer Temperatur zwischen 480 °C und 510 °C homogenisiert wird,
- der optional homogenisierte Walzbarren warmgewalzt wird, um ein Blech mit einer Dicke e zwischen 15 und 50 mm zu erhalten,
- das Blech bei einer Temperatur zwischen 480 und 505 °C lösungsgeglüht wird, für eine Dauer t, ausgedrückt in Stunden, die so bemessen ist, dass t ≥ e / 7,
- das lösungsgeglühte Blech abgeschreckt wird,
- das abgeschreckte Blech kalt gereckt wird, mit einer bleibenden Verformung zwischen 1,5 und 3%,
- eine Auslagerung bei Raumtemperatur durchgeführt wird.

9. Verfahren nach Anspruch 8, bei dem das Raffinationsmittel ein Raffinationsmittel vom Typ AlTiC ist.

10. Verfahren nach Anspruch 8 oder Anspruch 9, bei dem das Lösungsglühen bei einer Temperatur von mindestens 495 °C durchgeführt wird und die Dauer t so bemessen ist, dass t ≤ e / 4,5.

11. Verfahren nach irgendeinem der Ansprüche 8 bis 10, bei dem die mittlere Temperatur beim Warmwalzen auf 60 mm Dicke mindestens 450 °C beträgt.

12. Flügelunterseitenelement eines Flugzeugs, umfassend ein Blech nach irgendeinem der Ansprüche 1 bis 7.

## Claims

1. Rolled product in the T351 temper, having a thickness between 15 and 50 mm, made of aluminium alloy according to the following composition, by weight%,
Cu: 3.85 - 4.15
Mg: 0.95 - 1.25
Mn: 0.45 - 0.57
Zr: 0.09 - 0.16
Ti: 0.005 - 0.1
Fe: < 0.070
Si: < 0.060
where Cu + Mg ≤ 5.15
other elements less than 0.05 each and less than 0.15 in total, remainder aluminium.

2. Product according to claim 1 wherein Fe 0.030 - 0.060% by weight and/or Si: 0.020 - 0.040% by weight.

3. Product according to claim 1 or claim 2 wherein, by weight%, Mn: 0.48 - 0.55.

4. Product according to any one of claims 1 to 3 wherein, by weight %, the manganese content is at least 0.51% by weight and preferably at least 0.54% by weight.

5. Product according to any one of claims 1 to 4 wherein, by weight %, Mg: 0.96 - 1.15 and preferably 0.98 - 1.10.

6. Product according to any one of claims 1 to 5 wherein, by weight %, Cu + Mg ≤ 5.05.

7. Product according to any one of claims 1 to 6 having a ratio Rₘ(L)/Rp_{0.2} (L) > 1.25.

8. Process for manufacturing a rolled product according to any one of claims 1 to 7 wherein
- an alloy according to the composition of any one of claims 1 to 6 is prepared and cast by adding an AlTiB or AlTiC refiner to obtain a rolling ingot,
- optionally said rolling ingot is homogenised at a temperature between 480°C and 510°C,
- said optionally homogenised rolling ingot is hot rolled to obtain a sheet of thickness e between 15 and 50 mm,
- said sheet is solution heat-treated at a temperature between 480 and 505°C for a time t expressed in hours such that t ≥ e/7,
- said thus solution heat-treated sheet is quenched,
- cold stretching of said thus quenched sheet is carried out with a deformation between 1.5 and 3%,
- ageing is carried out at ambient temperature.

9. Process according to claim 8 wherein said refiner is an AlTiC type refiner.

10. Process according to claim 8 or claim 9 wherein said solution heat treatment is carried out at a temperature of at least 495°C and said time t is such that t ≤ e/4.5.

11. Process according to any one of claims 8 to 10 wherein the average temperature during the hot rolling to the thickness 60 mm is at least 450°C.

12. Aircraft wing lower wing skin element comprising a sheet according to any one of claims 1 to 7.
